# FASCICULE DE BREVET EUROPEEN

(11) **EP 0 624 741 B1**
(45) Date de publication et mention de la délivrance du brevet: **19.03.1997**
(21) Numéro de dépôt: 94400925.7
(22) Date de dépôt: 28.04.1994
(51) Int. Cl.: F16H 59/10

(54) **Dispositif formant commande de vitesses pour boîte de vitesses automatique de véhicule**
Gangschaltungseinrichtung für ein automatisches Kraftfahrzeuggetriebe
Gear shift device for an automatic automotive gearbox

(30) Priorité: 11.05.1993 FR 9305662
(43) Date de publication de la demande: 17.11.1994
(73) Titulaire: AUTOMOBILES PEUGEOT, 75116 Paris (FR); AUTOMOBILES CITROEN, 92200 Neuilly-sur-Seine (FR)
(72) Inventeur: Coppin, Olivier, F-77400 Thorigny Sur Marne (FR); Warnier, Christophe, F-92400 Courbevoie (FR)
(74) Mandataire: Thinat, Michel

(56) Documents cités:
- EP-A- 0 365 715
- EP-A- 0 476 291
- DE-A- 3 717 674
- FR-A- 2 695 492
- US-A- 4 732 232
- US-A- 4 991 460

## Description

La présente invention concerne un dispositif formant commande de vitesses pour boîte de vitesses automatique de véhicule.

On connaît un tel dispositif (EP-A-0 476 291) selon lequel un levier de commande est mobile longitudinalement et transversalement en étant guidé par une grille en escalier déterminant plusieurs positions longitudinales du levier, telles que P (parcage), R (recul), N (neutre), D (marche avant) ainsi qu'une position décalée transversalement, au droit de la position longitudinale D, à partir de laquelle des impulsions longitudinales sur le levier de commande actionnent des moyens modifiant l'automatisme du fonctionnement de la boîte de vitesses, dans un sens ou dans l'autre, pour obtenir respectivement des rapports plus longs ou plus courts.

Cependant, ce dispositif de commande connu impose une configuration de grille augmentant l'encombrement du dispositif de commande et le levier de commande n'est pas aisément manoeuvrable.

La présente invention a pour but d'éliminer les inconvénients ci-dessus en proposant un dispositif formant commande de vitesses pour boîte de vitesses automatique de véhicule, selon lequel un levier de commande est mobile longitudinalement et transversalement en étant guidé par une grille en escalier déterminant plusieurs positions longitudinales du levier, telles que P (parcage), R (recul), N (neutre), D (marche avant) ainsi qu'une position décalée transversalement, au droit de la position longitudinale D, à partir de laquelle des impulsions longitudinales sur le levier de commande actionnent des moyens modifiant l'automatisme du fonctionnement de la boîte de vitesses, dans un sens ou dans l'autre pour obtenir respectivement des rapports plus longs ou plus courts, dispositif qui est caractérisé en ce que le levier est poussé transversalement par un moyen élastique l'amenant automatiquement dans la position décalée quand il est placé dans la position longitudinale de marche avant D.

Selon une caractéristique de l'invention, dans sa position décalée, le levier est placé entre deux ressorts opposés de rappel longitudinal avec interposition de deux lames à extrémités libres respectives en vis-à-vis s'évasant de manière à faciliter l'approche du levier vers cette position par le déplacement transversal dû au moyen élastique.

Avantageusement, les moyens de modification précités comprennent des capteurs, par exemple à micro contacts ou de pression, détectant les impulsions longitudinales appliquées au levier de commande.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels.

La figure 1 représente en perspective un boîtier de commande de vitesses.

La figure 2 est une vue de dessus suivant la flèche II de la figure 1 d'une grille de guidage faisant partie de ce boîtier.

La figure 3 représente schématiquement une variante de réalisation de moyens de rappel du levier de commande de changement de vitesses autour d'une position D.

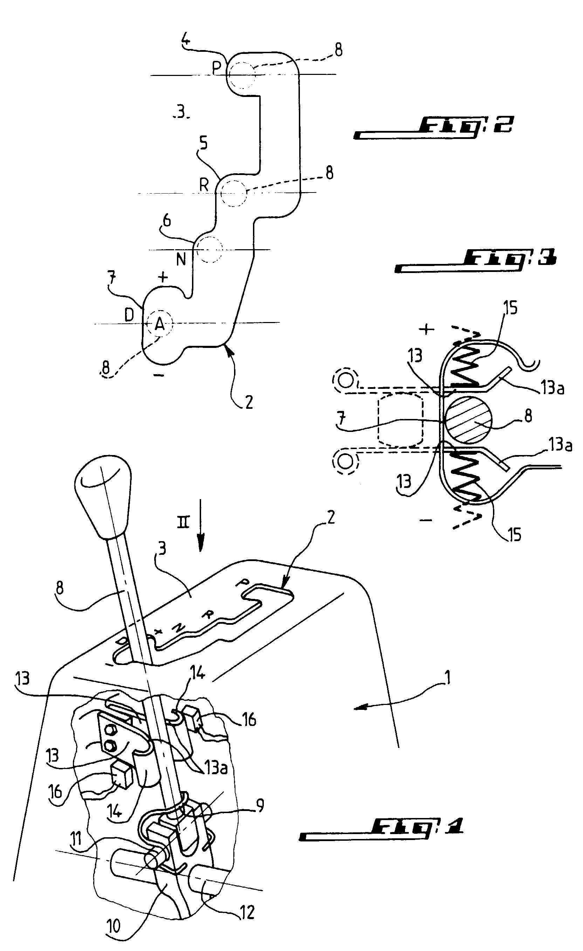

En se reportant aux figures 1 et 2, le boîtier 1 permettant la commande d'une boîte de vitesses automatique comprend une grille 2 formée dans la partie supérieure plane 3 du boîtier 1.

Cette grille comprend des encoches successives 4, 5, 6, 7 de positionnement du levier de commande 8 correspondant respectivement aux positions P de parcage, R de marche arrière, N de point neutre et D de marche avant. Les encoches 4, 5, 6 , 7 configurent la grille en escalier.

Le levier de commande 8 est mobile longitudinalement et transversalement de façon guidée par la grille en escalier 2 pour occuper l'une des positions longitudinales correspondant à la position P, R, N ou D susmentionnée, ainsi qu'une position décalée transversalement, au droit de la position longitudinale D, à partir de laquelle des impulsions longitudinales appliquées sur le levier de commande 8 actionnent des moyens modifiant l'automatisme du fonctionnement de la boîte de vitesses, dans un sens symbolisé par "+" ou dans l'autre sens symbolisé par "-" pour obtenir respectivement des rapports plus longs ou plus courts.

Selon l'invention, le levier 8 est poussé transversalement par un moyen élastique 9 l'amenant automatiquement dans la position décalée A quand le levier 8 est placé dans la position longitudinale D de marche avant. Le moyen élastique 9 maintient ainsi constamment en appui le levier 8 sur le bord gauche, au vu de la figure 2, de l'encoche 7 de la grille tout en permettant au levier 8 un débattement longitudinal dans le sens symbolisé par "+" ou dans le sens symbolisé par "-" autorisé par la forme approximativement oblongue longitudinale de l'encoche 7.

Le moyen élastique 9 est constitué par une agrafe métallique, par exemple en acier, représentée en figure 1 et montée entre une chape 10 de support d'un axe 11 sur lequel est fixée l'extrémité inférieure du levier 8 à l'intérieur du boîtier 1 et le levier 8 de façon à faire pivoter celui-ci autour de l'axe 11 dans le sens anti-horaire à la position A quand le levier 8 est placé dans la position longitudinale D. La chape 10 est solidaire d'un axe 12 de commande de la boîte de vitesses.

Dans sa position décalée A, le levier 8 est placé entre deux ressorts opposés de rappel longitudinal avec interposition de deux lames 13 à extrémités libres respectives en vis-à-vis 13a s'évasant de manière à faciliter l'approche du levier 8 vers la position décalée A par le déplacement transversal de celui-ci dû au moyen élastique 9, les extrémités des lames 13 opposées à ces extrémités libres étant fixées à une partie fixe du boîtier 1.

Comme représenté en figure 1, les deux ressorts de rappel sont constitués par les lames 13 elles-mêmes, réalisées en métal élastique et fléchissant à partir de leur extrémité fixée au boîtier.

Selon le mode de réalisation représenté en figure 3, les deux ressorts de rappel sont formés par des ressorts de compression 15 ayant une de leurs spires extrêmes en appui sur la lame correspondante 13 et leur autre spire extrême opposée en appui sur une partie fixe (non représentée) du boîtier 1.

Le dispositif de l'invention comprend également des capteurs permettant de détecter les actions exercées sur le levier 8 dans le sens symbolisé par "+" ou dans le sens symbolisé par "-" lorsque celui-ci occupe la position décalée A. Ces capteurs peuvent être constitués par des capteurs électriques du type à micro- contacts ou par des capteurs de pression détectant la pression exercée sur le levier. Ces capteurs peuvent être fixés sur la grille ou, comme représenté en figure 1, dans le boîtier 1 de telle façon qu'à un déplacement longitudinal du levier 8 dans le sens symbolisé par "+" ou dans le sens symbolisé par "-", la partie formant ressort 14 de la lame 13 qui est déplacée par le levier 8, actionne le capteur lui faisant face 16 pour modifier l'automatisme du fonctionnement de la boîte de vitesses.

La boîte de vitesses comporte des billages au niveau de sa commande interne, qui correspondent aux différentes positions P, R, N, D du levier de commande 8. En l'absence d'une action du conducteur, le levier 8 est maintenu en position D par le billage correspondant. On notera que lors d'une action du levier 8 vers le sens symbolisé par "+" ou vers le sens symbolisé par "-", celui-ci est écarté, par rapport à la position D, d'une course notablement plus faible que celle l'amenant à la position N.

Le fonctionnement du dispositif ressort déjà de la description qui en a été faite ci-dessus et va être maintenant expliqué.

Lorsque le levier de commande 8 est en position D et est amené à la position décalée A sous l'action du moyen élastique 9, le conducteur peut modifier le comportement de la boîte de vitesses.

Ainsi, une action sur le levier 8 dans le sens repéré symbolisé par "-" sur la grille 2 est détectée par le moyen capteur correspondant qui fournit un signal électrique modifiant l'automatisme du fonctionnement de la boîte de vitesses pour obtenir un rapport plus court, par exemple dans un mode de vitesse "3" où les rapports sont limités à la troisième vitesse. Une action supplémentaire sur le levier de commande 8 place ensuite la boîte de vitesses dans un mode de vitesse "2" où les rapports sont limités à la deuxième vitesse. Toute action sur le levier 8 dans le sens symbolisé par "-" est donc interprétée par la boîte de vitesses comme la volonté du conducteur de n'autoriser que des rapports de vitesses inférieurs.

De façon similaire, une action sur le levier de commande 8 dans le sens opposé (repère symbolisé par "+" de la grille) indique à la boîte de vitesses la volonté du conducteur de passer dans un mode autorisant l'engagement d'une vitesse supérieure. De la sorte, la boîte de vitesses passe automatiquement du mode de vitesses 1 au mode de vitesse 2, du mode de vitesse 2 au mode de vitesse 3 ou du mode de vitesses 3 au mode de marche avant D.

Le dispositif conforme à l'invention permet ainsi le remplacement des positions 3, 2 et 1 d'une grille classique par une commande de type impulsionnel pour boîte de vitesses automatique à gestion électronique, qui facilite toute manoeuvre de changement de vitesses avec des débattements longitudinaux très faibles du levier de commande. L'utilisation de la grille résultant du dispositif de l'invention permet de réduire l'encombrement de la commande de vitesses et favorise son implantation par rapport à une grille classique du genre P, R, N, D, 3, 2, 1. Enfin, l'ergonomie de la grille de l'invention est améliorée par rapport à une grille classique grâce à un meilleur repérage des positions et à un déplacement moindre du bras du conducteur et permet un passage rapide de la position D à la position R.

## Revendications

1. Dispositif formant commande de vitesses pour boîte de vitesses automatique de véhicule, selon lequel un levier de commande (8) est mobile longitudinalement et transversalement en étant guidé par une grille en escalier déterminant plusieurs positions longitudinales du levier, telles que P (parcage), R (recul), N (neutre), D (marche avant) ainsi qu'une position décalée transversalement (A), au droit de la position longitudinale (D) à partir de laquelle des impulsions longitudinales sur le levier de commande (8) actionnent des moyens modifiant l'automatisme du fonctionnement de la boîte de vitesses, dans un sens (+) ou dans l'autre sens (-) pour obtenir respectivement des rapports plus longs ou plus courts, caractérisé en ce que le levier de commande (8) est poussé transversalement par un moyens élastique (9) l'amenant automatiquement dans la position décalée (A) quand le levier (8) est placé dans la position longitudinale (D) de marche avant et en ce que, dans sa position décalée (A), le levier de commande (8) est placé entre deux ressorts opposés de rappel longitudinal (14 ; 15) avec interposition de deux lames (13) à extrémités libres respectives en vis-à-vis s'évasant (13a) pour faciliter l'approche du levier (8) vers cette position pour le déplacement transversal dû au moyen élastique (9).

2. Dispositif selon la revendication 1, caractérisé en ce que les moyens de modifications précités comprennent des capteurs (16), par exemple à micro-contacts ou de pression, détectant les impulsions longitudinales appliquées au levier de commande (8).

3. Dispositif selon la revendication 1 ou 2, caractérisé en ce que les deux ressorts de rappel sont constitués par les lames (13) elles-mêmes, fléchissant à partir de leur extrémité fixe.

## Patentansprüche

1. Gangschaltungsvorrichtung für ein automatisches Fahrzeuggangschaltgetriebe, bei welcher ein Schalthebel (8) längs-und querbewegbar ist, wobei er durch ein treppenförmiges Gitter geführt wird, welches mehrere Längsstellungen des Hebels, wie P(Parken), R(Rückwärtsgang), N(Nullpunkt), D(Vorwärtsgang) sowie eine querversetzte Stellung (A) in der Höhe der Längsstellung (D) bestimmt, von welcher ab Längsimpulse auf den Schalthebel (8) die Arbeitsautomatik des Gangsschaltgetriebes ändernde Mittel in die eine Richtung (+) oder in die andere Richtung (-) betätigen, um jeweils längere oder kürzere Gangverhältnisse zu erhalten, dadurch gekennzeichnet, dass der Schalthebel (8) in Querrichtung durch ein elastisches Mittel (9) geschoben wird, welches ihn automatisch in die versetzte Stellung (A) bringt, wenn der Hebel (8) in die Längsstellung (D) des Vorwärtsganges gestellt wird und dass in seiner versetzten Stellung (A), der Schalthebel (8) zwischen zwei entgegengesetzte Federn (14;15) zur Längsrückstellung liegt, mit Zwischenschaltung von zwei Blattstreifen (13) mit jeweiligen einander gegenüberliegenden freien Enden, die sich auseinander spreizen (13a), um die Annäherung des Hebels (8) zu dieser Stellung hin für die durch das elastische Mittel (9) verursachte Querverschiebung zu erleichtern.

2. Vorrichtung nach Anspruch 1, dadurch gekennzeichnet, dass die vorgenannten Änderungsmittel an dem Schalthebel (8) angelegte Längsimpulse ermittelnde Meßwertgeber (16), z.B. mit Kleinkontakten oder Druckfühlern aufweisen.

3. Vorrichtung nach Anspruch 1 oder 2, dadurch gekennzeichnet, dass die beiden Rückstellfedern durch die Blattstreifen (13) selber gebildet werden, die sich von ihrem ortsfesten Ende ab biegen.

## Claims

1. Device forming a gear shift control for an automatic speed change gearbox for an automotive vehicle, according to which a shift lever (8) is longitudinally and transversely movable while being guided by a stepped gear shifting gate determining several longitudinal positions of the lever such as P (parking), R (reversing), N (neutral), D (forward speed) as well as a transversely offset position (A) at the level of the longitudinal position (D) from which longitudinal impulses upon the shift lever (8) are actuating means modifying the operating automatism of the speed change gear box in one direction (+) or in the other direction (-) to obtain longer or shorter ratios, respectively, characterized in that the shift lever (8) is transversely pushed by an elastic means (9) bringing it automatically into the offset position (A) when the lever (8) is placed in the longitudinal forward speed position (D) and in that in its offset position (A), the shift lever (8) is placed between two opposite springs for longitudinal drawback (14;15) with the interposition of two blades (13) with respective mutually confronting free ends which are flaring (13a) to facilitate the approach of the lever (8) towards this position for the transverse displacement due to the elastic means (9).

2. Device according to claim 1, characterized in that the aforesaid modification means comprise sensors (16) for example with microswitches or pressure sensors detecting the longitudinal impulses applied to the shift lever (8).

3. Device according to claim 1 or 2, characterized in that both drawback springs are constituted by the blades (13) themselves bending from their stationary end.
